# EUROPÄISCHE PATENTSCHRIFT

(11) **EP 0 938 922 B1**
(45) Veröffentlichungstag und Bekanntmachung des Hinweises auf die Patenterteilung: **19.09.2001**
(21) Anmeldenummer: 99103463.8
(22) Anmeldetag: 23.02.1999
(51) Int. Cl.: B01J 2/16, B01J 8/26

(54) **Wirbelschichtreaktor und seine Verwendung**
Fluidized bed reactor and its use
Reacteur à lit fluidisé et son utilisation

(30) Priorität: 27.02.1998 DE 19808439
(43) Veröffentlichungstag der Anmeldung: 01.09.1999
(73) Patentinhaber: Degussa AG, 40474 Düsseldorf (DE)
(72) Erfinder: Kohlen, Rainer, Dr., 61273 Wehrheim (DE); Kaiser, Lothar, 63150 Heusenstamm (DE); Ruhs, Alexander, Dr., 79618 Rheinfelden (DE); Bertsch-Frank, Birgit, Dr., 63584 Gründau (DE)

(56) Entgegenhaltungen:
- WO-A-93/06941
- GB-A- 1 508 777

## Beschreibung

Die Erfindung richtet sich auf einen Wirbelschichtreaktor mit einer erfindungsgemäßen Granulat-Austragsvorrichtung und seine Verwendung zur kontinuierlichen Herstellung eines Granulats. Die Austragsvorrichtung ermöglicht eine störungsfreie Überführung des Granulats in eine nachgeschaltete kontinuierliche Prozeßstufe, insbesondere eine in einer Wirbelschicht ausgeführte Prozeßstufe.

Die kontinuierliche Herstellung von Granulaten sowie beschichteten Granulaten durch Einsprühen flüssiger Ausgangsstoffe auf oder in die Wirbelschicht eines ein- oder mehrstufigen Wirbelschichtreaktors gewinnt zunehmend größere technische Bedeutung. Eine Übersicht über die Technologie der Wirbelschicht-Sprühgranulation, die sich zum Granulataufbau als auch zur Beschichtung von Granulat eignet, vermittelt H. Uhlemann in Chem.Ing.Tech, 62 (1990), S. 822-834. Wirbelschichtreaktoren umfassen im allgemeinen einen Behälter mit einem darin waagrecht oder geneigt angeordneten Anströmboden, wobei der Bereich über dem Anströmboden als Wirbelschichtkammer und jener unter demselben als Windkasten bezeichnet wird, Vorrichtungen zum Zuführen eines Fluidisierungsgases, dem gleichzeitig die Funktion eines Trocknungs- und/oder Reaktiongases zukommen kann, und Abführen des aus der Wirbelschicht austretenden Gases, Vorrichtungen zum Zuführen fester Ausgangsstoffe, wie Keimen oder zu beschichtenden Partikeln, und/oder Zuführen flüssiger Ausgangsstoffe, wie Lösungen und Schmelzen, sowie eine oder mehrere Vorrichtungen zum Austragen des in der Wirbelschicht gebildeten Granulats.

Bei den Austragsvorrichtungen kann es sich um solche mit oder ohne Sichterwirkung handeln. Vorrichtungen mit sichtendem Granulataustrag umfassen meistens Sichterrohre, deren oberes Ende in der Ebene des Anströmbodens liegt und durch welche entgegen der Granulataustragsrichtung ein Sichtergas strömt. Ein nicht-sichtender Austrag kann auch als Auslaß in der Seitenwand der Wirbelschichtkammer ausgebildet sein, wobei die Unterkante der Auslaßöffnung auf der Höhe des Wirbelschichtbodens liegt. Gemäß EP-Patent 0 332 929 ist an den Anströmboden eines Wirbelschichtgranulators zur Wirbelschichtsprühgranulation ein Zick-Zack-Sichter angeschlossen und an der Anschlußstelle ein Rückführungsschacht aufgesetzt. Zwecks Vermeidung eines Rückstaus wird das Granulat aus der Wirbelschichtkammer durch ein Unterlaufwehr dem Sichter zugeführt.

Das Dokument GB-A-1 508 777 berchreibt einen Wirbelschichtreaktor mit einer getrennten Zufuhr des Fluidisierungsmediums für die Wirbelschichtkammer und für die Vorrichtung zum Austragen des Granulats. Diese als Schacht gebildete Austragsvorrichtung ist oben nicht geschlossen.

Bei der kontinuierlichen Herstellung eines Granulats durch Wirbelschichtsprühgranulation und Umhüllung dieses Granulats durch Aufsprühen eines flüssigen Hüllmaterials in einem nachgeschalteten zweiten Wirbelschichtreaktor wurde das Granulat des ersten Wirbelschichtreaktors über Klassierrohre nach unten durch den Boden ausgetragen und dann über Durchblase-Zellradschleusen und pneumatische Förderleitungen dem der Beschichtung dienenden zweiten Wirbelschichtreaktor zugeführt. Es zeigte sich, daß der Bedienungsaufwand und die Störanfälligkeit dieser

Verfahrensweise hoch sind. Um den apparativen, energetischen und personellen Aufwand zu reduzieren, wurde versucht, unter Verwendung eines zwei Zonen umfassenden rinnenförmigen Wirbelschichtreaktors beide Stufen im Durchfahrbetrieb zu realisieren. Als Vorrichtung zum Trennen der beiden Zonen wurden übliche Wehre mit und ohne Unterlauföffnungen getestet. In allen Fällen kam es zu nicht tolerierbaren Rückvermischungen. Ein weiteres Problem bestand darin, daß die Füllstandshöhe, welche für die Produktqualität und Betriebssicherheit von großem Einfluß ist, nicht konstant gehalten werden konnte. Schwankende Wirbelschichthöhen wirkten sich zudem nachteilig auf die Standzeit der Sprühdüsen aus.

Aufgabe der Erfindung war demnach, einen Wirbelschichtreaktor bereitzustellen, womit sich einzelne und vorzugsweise alle aufgezeigten Probleme vermeiden oder zumindest vermindern lassen. Gemäß einer weiteren Aufgabe sollte der Wirbelschichtreaktor derart ausgebildet sein, daß das kontinuierlich ausgetragene Granulat unmittelbar einer nachfolgenden, kontinuierlich betriebenen Prozeßstufe, insbesondere einer in einer Wirbelschicht durchgeführten Prozeßstufe, als Ausgangsmaterial zugeführt werden kann und es zu keinen Rückvermischungen zwischen beiden Stufen kommt. Gemäß einer weiteren Aufgabe sollte der Wirbelschichtreaktor so ausgebildet sein, daß die Schichthöhe zuverlässig konstant gehalten werden kann.

Gefunden wurde ein Wirbelschichtreaktor zur kontinuierlichen Herstellung eines Granulats, umfassend eine Wirbelschichtkammer (K1), deren Boden als Anströmboden (1) ausgebildet ist, Vorrichtungen zum Zu- und Abführen eines Fluidierungsgases (11.1 und 15.1), Vorrichtungen zum Zuführen flüssiger oder in einer Flüssigkeit gelöster und/oder suspendierter Ausgangsprodukte des Granulats (8.1 und 9.1) und mindestens eine Vorrichtung zum Austragen des Granulats, der dadurch gekennzeichnet ist, daß die Austragsvorrichtung als Siphonrohr oder als ein eine Schachtwand (3) und eine Kammerwand (2) umfassendes schachtförmiges Siphonwehr ausgebildet ist, wobei die Unterkante der Schachtwand der Austragsvorrichtung in einer Höhe h₁ und die Unterkante (6) der Auslaßöffnung (5) der Austragsvorrichtung in einer Höhe h₂, jeweils gemessen vom Anströmboden, angeordnet sind, h₂ größer als h₁ ist und h₂ einen Wert hat, der im Betriebszustand einen Granulatüberlauf gewährleistet.

Der zwischen Kammerwand und Schachtwand gebildete Schacht ist oben geschlossen. Der Schachtboden ist als Anströmboden ausgebildet und weist keine von der Kammer unabhängige Vorrichtung zur Zufuhr von Fluidisierungsgas auf.

Die Unteransprüche richten sich auf bevorzugte Ausführungsformen des Reaktors und diesen Reaktor umfassende Reaktorkombinationen. Erfindungswesentliches Element ist die als Siphonrohr oder als Siphonwehr ausgebildete Austragsvorrichtung. Der Wirbelschichtreaktor kann eine oder mehrere erfindungsgemäße Austragsvorrichtungen enthalten.
Figur 1 zeigt in schematischer Form einen Längsschnitt durch einen besonders bevorzugten Wirbelschichtreaktor mit zwei Kammern und einer erfindungsgemäßen Austragsvorrichtung zwischen diesen Kammern.
Figur 2 zeigt das Schema eines Siphonwehrs als Trenneinheit zwischen zwei unabhängigen Wirbelschichtkammern.
Figur 3 zeigt dp-50-Werte von Proben aus beiden Kammern, wobei aus Gründen der Vergleichbarkeit die Zeitwerte des Produktes aus der zweiten Kammer um die mittlere Verweilzeit des Produktes in dieser Kammer korrigiert wurden.

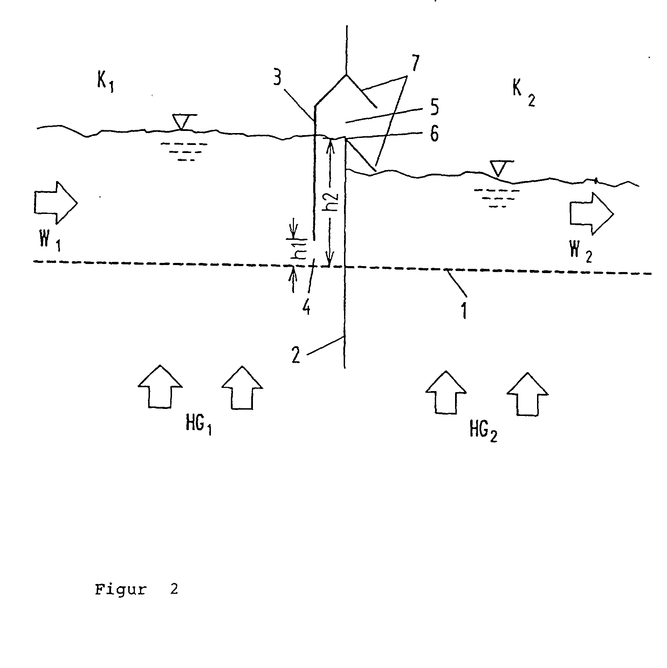

Die Funktion der Austragsvorrichtung in Form des bevorzugten schachtförmigen Siphonwehrs wird anhand der Figur 2 näher erläutert. Zwei Kammern K₁ und K₂ eines Wirbelschichtreaktors mit dem Anströmboden 1 sind durch eine Kammerwand 2, welche Bestandteil des Siphonwehrs ist, voneinander getrennt. Die in der Kammer K₁ angeordnete Schachtwand des Wehrs ist in wirksamem Abstand von der Kammerwand angeordnet und bildet mit dieser einen Schacht. Der in der Kammer K₁ befindliche Schacht ist oben geschlossen, zur Förderrichtung hin, also zur Kammer 2, aber offen und dient als Auslaßöffnung 5 (= Überlauföffnung). Die Unterkante 6 der Auslaßöffnung ist in einer Höhe h₂ über dem Anströmboden angeordnet. Seitlich ist der Schacht geschlossen, das heißt, als Kasten ausgebildet. Die Unterkante des Wehrs endet in der Höhe h₁ oberhalb des Anströmbodens. Oberhalb und unterhalb der in der Kammerwand angeordneten Überlauföffnung 5 befinden sich vorzugsweise Abweisdächer 7 und 8, womit ein zufälliges Zurückführen von in der Kammer K₂ aufgewirbeltem Produkt in die Kammer K₁ vermieden wird. Die Einlaßöffnung 4 des Schachts befindet sich zwischen dem Anströmboden und der Unterkante der Schachtwand 3. Der Schachtboden ist im wesentlichen als Anströmboden ausgebildet, so daß das Fluidisierungsgas auch in den Schacht eintreten kann. Die unmittelbar hintereinander geschalteten Wirbelschichten in den Kammern K₁ und K₂ sind mit W₁ und W₂ bezeichnet. Die waagrechten Pfeile geben die Fließrichtung der Wirbelschichten, die senkrechten Pfeile unter dem Anströmboden die Richtung des Fluidisierungsgases an. Das Siphonwehr gestattet die Förderung des Granulats aus der Kammer K₁ in die Kammer K₂ durch den zwischen der Schachtwand 3 und Trennwand 2 gebildeten Schacht, wenn die Höhe der Wirbelschicht in K₁ über ein bestimmtes Maß, im allgemeinen über die Höhe h₂, ansteigt. Ein Leerlaufen der Granulationskammer K₁ und Überlastung oder andere Betriebsstörung in der Kammer K₂ werden durch das Siphonwehr verhindert. Der Füllstand in der Kammer K₁ kann sicher und unabhängig vom Füllstand in der Kammer K₂ gehalten werden. Ein Druckunterschied zwischen beiden Kammern beeinflußt zwar den Füllstand in K₁, dieser Einfluß ist aber kalkulierbar und beherrschbar. Die Förderwirkung im Schacht wird dadurch unterstützt, daß dieser im Gegensatz zur üblichen Ausführungsform der eigentlichen Wirbelschichtkammer keinen erweiterten Expansionsraum besitzt. Das Wehr verhindert ferner eine Rückvermischung; die Wirkung wird durch die Abweisdächer weiter verbessert. Der Abstand der Unterkante der Schachtwand 3 vom Anströmboden 1 ist für den Klassiereffekt zwischen K₁ und K₂ maßgebend.

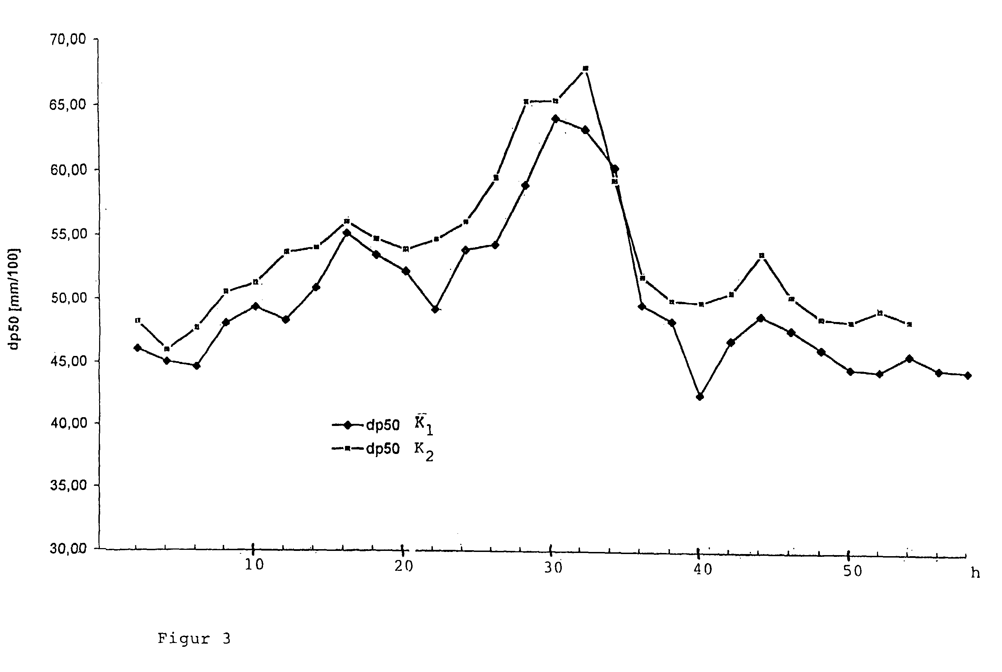

Der festgestellte und durch das Siphonwehr verursachte Klassiereffekt wird darauf zurückgeführt, daß in einem üblichen Wirbelschichtapparat mit konisch erweiterem Expansionsraum die Aufenthaltswahrscheinlichkeit von gröberen Teilchen direkt über dem Anströmboden, also im Bereich der Einlaßöffnung des Siphonwehrs, höher ist. Figur 3 zeigt den Effekt, wie er in einem Betrieb zur Herstellung eines gecoateten Granulats durch Aufbaugranulation in der Kammer K₁ und Coatung in der Kammer K₂ erhalten wurde. Obgleich durch das Coaten der dp₅₀-Wert um etwa 2 % ansteigt (homogene Verteilung auf der Teilchenoberfläche angenommen) und auch in der Kammer 2 eine Entstaubung erfolgt, bleibt ein durch das Siphonwehr bedingter Klassiereffekt bestehen. Die beiden Kurven in Figur 3 wurden zum Zwecke der Vergleichbarkeit um die mittlere Verweilzeit verschoben.

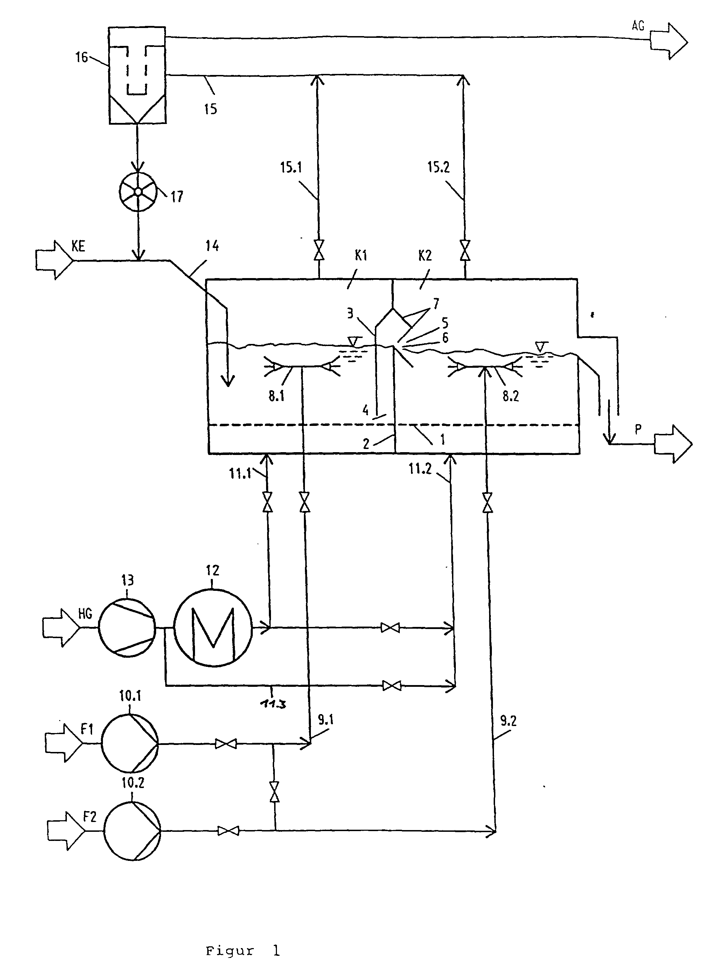

Figur 1 zeigt in schematischer Form einen Schnitt durch eine rinnenförmige zweistufige Wirbelschichtapparatur mit einem Siphonwehr zwischen der ersten und zweiten Wirbelschichtkammer. Hierin bedeuten:

Die Bezugszeichen 1 bis 7 haben die gleiche Bedeutung wie zuvor anhand der Figur 2 beschrieben. Die Kammern K₁ und K₂ weisen Sprühdüsen 8.1 und 8.2 zum Versprühen einer Lösung F₁ oder zwei verschiedener Lösungen F₁ und F₂ auf, die über die Leitungen 9.1 und 9.2 zugeführt werden und deren Dosierung über eine Pumpe 10.1 oder die Pumpen 10.1 und 10.2 geregelt wird. Beiden Kammern wird zur Erzeugung der Wirbelschichten ein Heißgas HG zugeführt; das Wirbelschichtgas wird mittels eines Gebläses 13 gefördert und mittels eines Wärmetauschers 12 aufgeheizt. Durch Mischen von Heißgas mit nicht aufgezeigtem Gas (Leitung 11.3) können die Betriebsbedingungen in beiden Kammern unterschiedlichen Sprühraten angepaßt werden. Das aus den Kammern austretende Gas gelangt über die Leitungen 15.1, 15.2 und 15 in einen Staubabscheider 16, wird dort entstaubt und tritt als Abgas AG aus. Der abgeschiedene Staub wird über eine Zellenradschleuse 17 und Leitung 14 der Kammer K₁ zugeführt; weitere Keime KE aus beliebiger anderer Quelle können über die gleiche Leitung 14 in die Kammer K₁ eingeschleust werden. Das Granulat P wird aus der Kammer K₂ ausgetragen.

Der Wirbelschichtreaktor kann rund oder rinnenförmig ausgebildet sein. Bei der besonders bevorzugten rinnenförmigen Bauart lassen sich n+1 Stufen hintereinander schalten, wobei n eine ganze Zahl ist, vorzugsweise eine Zahl von 1 bis 9. Die mit einem Siphonwehr ausgestattete Trennwand zwischen den Stufen kann diese ganz oder teilweise voneinander trennen. Die Trennwand ist zweckmäßigerweise mindestens so hoch, daß eine Rückvermischung verhindert wird.

Gemäß einer weiteren Ausführungsform ist der Reaktor dadurch gekennzeichnet, daß er als Rundbehälter ausgebildet und die siphonartige Austragsvorrichtung axial angeordnet ist, wobei die Austragsvorrichtung ein Zentralrohr und ein um dieses konzentrisch angeordnetes oben hutartig abgeschlossenes Außenrohr umfaßt, die Unterkante des Außenrohrs in der Höhe h₁ und die Oberkante des Zentralrohrs in der Höhe h₂, jeweils gemessen vom Anströmboden, endet und zwischen der Oberkante des Zentralrohrs und dem hutartigen Verschluß ein wirksamer Austrittsquerschnitt verbleibt. Ein wirksamer Austrittsquerschnitt ist gewährleistet, wenn die Fläche des Ringspalts der Fläche des Querschnitts des Zentralrohrs entspricht und der Abstand zwischen der Oberkante des Zentralrohrs zum hutartigen Verschluß der Breite des Ringspalts entspricht.

Der erfindungsgemäße Wirbelschichtreaktor zeichnet sich durch seine einfache und zuverlässig wirksame Austragsvorrichtung aus. Nicht vorhersehbare, nachteilige Rückkopplungen mit einer nachfolgenden, insbesondere unmittelbar räumlich nachgeschalteten kontinuierlichen Prozeßstufe werden vermieden. Bei der nachgeschalteten Prozeßstufe handelt es sich um eine beliebige Stufe, insbesondere eine solche, welche selbst in einer Wirbelschicht durchgeführt wird. Beispielsweise kann es sich um eine weitere Granulation, eine Beschichtung durch Besprühen des Granulats mit einer Lösung, Suspension oder Schmelze der schichtbildenden Stoffe oder um eine thermische Nachbehandlung handeln. Demgemäß läßt sich der erfindungsgemäße Wirbelschichtreaktor mit einer oder mehreren Kammern sowie eine Reaktorkombination, deren erster Teil der Wirbelschichtreaktor ist, zur Herstellung, Beschichtung und Umwandlung von Granulaten verwenden. Eine bevorzugte Verwendung eines erfindungsgemäßen Wirbelschichtreaktors mit zwei oder mehr Kammern und einem Siphonwehr zwischen den Kammern eignet sich zur Herstellung umhüllter Granulate mit einer oder mehreren Hüllschichten. Durch die Verwendung einer erfindungsgemäßen Reaktorkombination, insbesondere eines zwei- oder mehrkammerigen Wirbelschichtreaktors gestaltet sich das mit geringem apparativen Aufwand betreibbare Verfahren störungsfrei und energetisch leicht optimierbar.

## Patentansprüche

1. Wirbelschichtreaktor zur kontinuierlichen Herstellung eines Granulats, umfassend eine Wirbelschichtkammer (K1), deren Boden als Anströmboden (1) ausgebildet ist, Vorrichtungen zum Zu- und Abführen eines Fluidierungsgases (11.1 und 15.1) in die Kammer K1, Vorrichtungen zum Zuführen flüssiger oder in einer Flüssigkeit gelöster und/oder suspendierter Ausgangsprodukte des Granulats (8.1 und 9.1) und mindestens eine Vorrichtung zum Austragen des Granulats,
**dadurch gekennzeichnet,**
**daß** die Austragsvorrichtung als Siphonrohr oder als ein eine Schachtwand (3) und eine Kammerwand (2) umfassendes schachtförmiges Siphonwehr ausgebildet ist, der zwischen der Kammerwand und Schachtwand gebildete und in der Kammer (K1) befindliche Schacht, dessen Boden als Anströmboden ausgebildet ist und welcher keine von der Kammer (K1) unabhängige Vorrichtung zur Zufuhr von Fluidisierungsgas aufweist, oben geschlossen, in Förderrichtung des Granulats hin aber offen ist, die Unterkante der Schachtwand der Austragsvorrichtung in einer Höhe h₁ und die Unterkante (6) der Auslaßöffnung (5) der Austragsvorrichtung in einer Höhe h₂, jeweils gemessen vom Anströmboden, angeordnet sind, h₂ größer als h₁ ist und h₂ einen Wert hat, der im Betriebszustand einen Granulatüberlauf gewährleistet.

2. Wirbelschichtreaktor nach Anspruch 1,
**dadurch gekennzeichnet,**
**daß** er rinnenförmig ausgebildet und an der der Förderrichtung gegenüber liegenden Kammerwand ein schachtförmiges, vorzugsweise über die gesamte Rinnenbreite reichendes, Siphonwehr angeordnet ist.

3. Wirbelschichtreaktor nach Anspruch 1,
**dadurch gekennzeichnet,**
**daß** er als Rundbehälter ausgebildet und die siphonartige Austragsvorrichtung axial angeordnet ist, wobei die Austragsvorrichtung ein Zentralrohr und ein um dieses konzentrisch angeordnetes oben hutartig abgeschlossenes Außenrohr umfaßt, die Unterkante des Außenrohrs in der Höhe h₁ und die Oberkante des Zentralrohrs in der Höhe h₂, jeweils gemessen vom Anströmboden, endet und zwischen der Oberkante des Zentralrohrs und dem hutartigen Verschluß ein wirksamer Austrittsquerschnitt verbleibt.

4. Wirbelschichtreaktor nach einem der Ansprüche 1 bis 3,
**dadurch gekennzeichnet,**
**daß** er über die Austragsvorrichtung mit einem zweiten kontinuierlich betreibbaren Wirbelschichtreaktor derart in Verbindung steht, daß aus dem ersten Wirbelschichtreaktor ausgetragenes Granulat dem zweiten Wirbelschichtreaktor zugeführt wird.

5. Wirbelschichtreaktor nach einem der Ansprüche 1, 2 oder 4,
**dadurch gekennzeichnet,**
**daß** die in der Kammerwand befindliche Auslaßöffnung (5) des schachtförmigen Siphonwehrs als Überlauföffnung ausgebildet ist und über und/oder unter derselben Abweisdächer (7) angeordnet sind.

6. Wirbelschichtreaktor nach einem der Ansprüche 1, 2, 4 oder 5,
**dadurch gekennzeichnet,**
**daß** er rinnenförmig ausgebildet und durch n quer zur Förderrichtung des Granulats angeordnete schachtförmige Siphonwehre in n + 1 Kammern unterteilt ist und wobei n für eine ganze Zahl von 1 bis 9 steht.

7. Verwendung eines Wirbelschichtreaktors gemäß einem der Ansprüche 1 bis 6 zur kontinuierlichen Herstellung eines Granulats und kontinuierlichen Einspeisung des Granulats in eine nachfolgende kontinuierlich betriebene Prozeßstufe.

8. Verwendung nach Anspruch 7,
**dadurch gekennzeichnet, daß** die nachfolgende Prozeßstufe eine kontinuierliche Behandlung des Granulats der ersten Stufe in einer Wirbelschicht ist.

9. Verwendung nach Anspruch 8,
**dadurch gekennzeichnet,**
**daß** in der ersten Stufe eine WirbelschichtSprühgranulation oder eine Beschichtung eines Granulats in der Wirbelschicht und in der nachfolgenden Stufe eine Beschichtung des aus der ersten Stufe ausgetragenen Granulats durchgeführt wird, wobei bei der Sprühgranulation Ausgangsstoffe des Granulats und bei der Beschichtung Ausgangsstoffe der Beschichtung in die Wirbelschicht eingesprüht werden.

## Claims

1. Fluidised bed reactor for the continuous production of granules, comprising a fluidised bed chamber (K1) whose floor is formed as a flow floor (1), devices for introducing and removing a fluidising gas (11.1 and 15.1) in the chamber K1, devices for introducing granule starting products in liquid form or dissolved and/or suspended in a liquid (8.1 and 9.1), and at least one device for discharging the granules, **characterised in that** the discharge device is formed as a siphon pipe or as a shaft-shaped siphon weir comprising a shaft wall (3) and a chamber wall (2), the shaft formed between the chamber wall and shaft wall and situated in the chamber (K1), whose floor is formed as a flow floor and which does not have any device for feeding fluidising gas independent of the chamber (K1), is closed at the top but is open in the conveying direciton of the granules, and the lower edge of the shaft wall of the discharge device is arranged at a height h₁ and the lower edge (6) of the outlet opening (5) of the discharge device is arranged at a height h₂, in each case measured from the flow floor, h₂ being greater than h₁ and h₂ having a value that ensures an overflow of granules in the operating state.

2. Fluidised bed reactor according to claim 1, **characterised in that** it is designed in the form of a tray and a shaft-shaped siphon weir preferably extending over the whole width of the tray is arranged on the chamber wall opposite the conveying direction.

3. Fluidised bed reactor according to claim 1, **characterised in that** it is designed as a circular vessel and the siphon-like discharge device is arranged axially, wherein the discharge device comprises a central pipe and an outer pipe arranged concentrically around the latter and closed at the top in the manner of a cap, the lower edge of the outer pipe terminates at the height h₁ and the upper edge of the central pipe terminates at the height h₂, in each case measured from the flow floor, and an effective outlet cross-section remains between the upper edge of the central pipe and the cap-like closure.

4. Fluidised bed reactor according to one of claims 1 to 3, **characterised in that** it communicates via the discharge device with a second, continuously operable fluidised bed reactor so that granules discharged from the first fluidised bed reactor are fed to the second fluidised bed reactor.

5. Fluidised bed reactor according to one of claims 1, 2 or 4, **characterised in that** the outlet opening (5) of the shaft-shaped siphon weir located in the chamber wall is designed as an overflow opening and is arranged above and/or below the guard roofs (7).

6. Fluidised bed reactor according to one of claims 1, 2, 4 or 5, **characterised in that** it is designed in the form of a tray and is subdivided by n shaft-shaped siphon weirs arranged transverse to the conveying direction of the granules into n + 1 chambers, where n is an integer from 1 to 9.

7. Use of a fluidised bed reactor according to one of claims 1 to 6 for the continuous production of granules and the continuous feeding of the granules into a following, continuously operating process stage.

8. Use according to claim 7, **characterised in that** the following process stage is a continuous treatment of the granules of the first stage in a fluidised bed.

9. Use according to claim 8, **characterised in that** in the first stage a fluidised bed spray granulation or a coating of granules in the fluidised bed is carried out and in the following stage the granules discharged from the first stage are coated, wherein, in the spray granulation, starting materials for the granules and, in the coating, starting materials for the coating are sprayed into the fluidised bed.

## Revendications

1. Réacteur à lit fluidisé pour la fabrication en continu d'un granulé, comprenant une chambre à lit fluidisé (K1) dont le fond est réalisé sous la forme d'un fond de soufflage (1), des dispositifs pour l'alimentation et l'évacuation d'un gaz de fluidisation (11.1, 15.1) dans la chambre K1, des dispositifs pour fournir des matières premières fluides ou dissoutes dans un fluide et/ou en suspension dans celui-ci pour les produits de départ du granulé (8.1, 9.1), et au moins un dispositif de sortie des granulés,
**caractérisé en ce que**
le dispositif de sortie est un tube formant siphon ou un déversoir à siphon, à cheminée comprenant une paroi de cheminée (3) et une cloison de chambre (2), la cheminée formée entre la cloison de chambre et la paroi de cheminée et qui se trouve dans la chambre (K1), dont le fond est réalisé sous la forme d'un fond de soufflage, et qui ne comporte pas de dispositif indépendamment de la chambre (K1) pour l'alimentation en gaz du lit fluidisé, est fermée dans sa partie supérieure mais ouverte dans la direction de passage des granulés, l'arête inférieure de la paroi de cheminée pour le dispositif de sortie se situe à une hauteur h₁ et l'arête inférieure (6) de l'orifice de sortie (5) du dispositif de sortie se trouvant à une hauteur h₂, ces hauteurs étant mesurées chacune par rapport au fond de soufflage avec h₂ supérieur à h₁, et h₂ a une valeur permettant un débordement en granulés pendant le fonctionnement.

2. Réacteur à lit fluidisé selon la revendication 1,
**caractérisé en ce qu'**
il est en forme de goulotte et la cloison de chambre en regard de la direction de transfert comporte un trop-plein-siphon, en forme de cheminée, s'étendant de préférence sur toute la largeur de la goulotte.

3. Réacteur à lit fluidisé selon la revendication 1,
**caractérisé en ce qu'**
il est sous la forme d'un réservoir rond et le dispositif de sortie en forme de siphon, est disposé axialement,
le dispositif de sortie comprenant un tube central et un tube extérieur concentrique, fermé dans la partie supérieure à la manière d'un chapeau, l'arête inférieure du tube extérieur se termine à la hauteur h₁ et l'arête supérieure du tube central se termine à la hauteur h₂ mesurée chaque fois à partir du fond de soufflage, et entre l'arête supérieure du tube central et la fermeture en forme de chapeau il subsiste une section de sortie efficace.

4. Réacteur à lit fluidisé selon l'une quelconque des revendications 1 à 3,
**caractérisé en ce qu'**
il est relié par le dispositif de sortie à un second réacteur à lit fluidisé fonctionnant en continu de façon que les granulés sortant du premier réacteur à lit fluidisé arrivent dans le second réacteur à lit fluidisé.

5. Réacteur à lit fluidisé selon l'une quelconque des revendications 1, 2 ou 4,
**caractérisé en ce que**
dans la cloison de chambre, l'orifice de sortie (5) du déversoir-siphon en forme de cheminée est réalisé sous la forme d'un orifice de déversoir et au-dessus et/ou en dessous de celui-ci il y a des déflecteurs (7).

6. Réacteur à lit fluidisé selon l'une quelconque des revendications 1, 2, 4, ou 5
**caractérisé en ce qu'**
il est en forme de goulotte et est subdivisé en (n + 1) chambres, par n déversoirs en siphon, en forme de cheminée, prévus transversalement à la direction de transfert des granulés, n étant un nombre entier compris entre 1 et 9.

7. Application d'un réacteur à lit fluidisé selon l'une quelconque des revendications 1 à 6 pour la fabrication en continu d'un granulé et pour l'alimentation en continu du granulé dans une étape de procédé fonctionnant en continu, en aval.

8. Application selon la revendication 7,
**caractérisée en ce que**
l'étape de procédé en aval est un traitement en continu dans un lit fluidisé des granulés de la première étape.

9. Application selon la revendication 8,
**caractérisée en ce que**
dans la première étape on effectue une granulation par pulvérisation en lit fluidisé ou un revêtement d'un granulé dans le lit fluidisé, et dans l'étape suivante on effectue un revêtement des granulés de la première étape, en pulvérisant des matières premières du granulé lors de la granulation par pulvérisation, et des matières premières de revêtement lors du revêtement dans le lit fluidisé.
